# EUROPEAN PATENT APPLICATION

(11) **EP 4 836 379 A1**
(43) Date of publication of application: **04.11.2026**
(21) Application number: 25214324.3
(22) Date of filing: 07.11.2025
(51) Int. Cl.: H04L 67/10, G06T 11/00, G06F 9/50

(54) **WORKFLOW PROCESSING MANAGEMENT FOR TEXT-TO-IMAGE GENERATION USING A DIFFUSION MODEL**

(30) Priority: 29.04.2025 US 202519193763
(71) Applicant: Bytedance Technology Ltd., KY1 - 1205 Grand Cayman Cayman Islands (KY); Beijing Zitiao Network Technology Co., Ltd., Beijing 100190 (CN)
(72) Inventor: Chen, Xin, Los Angeles, California, 90066 (US); Zhang, Jingtun, Culver City CA, 90230 (US); Liu, Xiao, Los Angeles, California, 90066 (US); Zhang, Yifei, Beijing, 100028 (CN); Shan, Jiaxin, Los Angeles, California, 90066 (US); Xie, Liguang, Los Angeles, California, 90066 (US); Chen, Jianjun, Los Angeles, California, 90066 (US); Shi, Rui, Beijing, 100028 (CN)
(74) Representative: Grünecker Patent- und Rechtsanwälte PartG mbB

(57) **Abstract**

Examples are disclosed relating to generating a synthesized image using a diffusion model in a manner that improves processing resource usage efficiency. In one example, a computing device is configured to execute a local diffusion engine that is configured to process a plurality of nodes in a workflow to generate a synthesized image using the diffusion model. The local diffusion engine is configured to, for each node that is labeled with a designation to be processed by a remote diffusion engine, capture input data for the node from the workflow, construct a node-specific workflow based on the input data, send the node-specific workflow to the remote diffusion engine, and receive output data generated by the remote diffusion engine based on processing the node-specific workflow. The output data is used to process a node of the workflow. The local diffusion engine is configured to output the synthesized image.

## Description

### BACKGROUND

A diffusion model is a type of generative artificial intelligence model that creates data, such as images, by learning to reverse a gradual noising process. During training, the diffusion model observes how clean data (e.g., an image) is slowly corrupted by the addition of Gaussian noise over a series of steps until the data is almost indistinguishable from pure random noise. The diffusion model is trained to learn the reverse process, which involves removing the noise step-by-step to reconstruct the original data. By learning to accurately predict this noise, the model can later be used to gradually subtract it from a random input during sampling, effectively generating new data.

In one example, where the diffusion model is trained to generate a new image also referred to as a synthesized image, the trained diffusion model begins with a random noise image and iteratively refines the image by removing noise in reverse order of the steps that the diffusion model was trained on. After enough steps, the final result is a coherent synthesized image that was generated from pure noise. This denoising process is typically guided by learned parameters, and in the case of text-to-image generation, is additionally conditioned on a text prompt. The conditioning is often done by first converting the text prompt into a vector using a text encoder (such as CLIP or T5), and feeding this information into the diffusion model so it can generate an image aligned with the semantic content of the prompt.

### SUMMARY

Examples are disclosed that relate to generating a synthesized image using a diffusion model in a manner that deploys processing resources on a fine-grained level to improve overall processing resource usage efficiency. In one example, a computing device comprises one or more processors configured to execute instructions stored in memory to execute a local diffusion engine. The local diffusion engine is configured to process a plurality of nodes in a workflow using a diffusion model to generate a synthesized image. The local diffusion engine is configured to, for each node of the workflow that is labeled with a designation to be processed by a remote diffusion engine, capture input data for the node from the workflow, construct a node-specific workflow for the node based at least on the input data captured for the node, send, via a communications network, the node-specific workflow to the remote diffusion engine, receive, via the communications network, output data for the node generated by the remote diffusion engine based at least on processing the node-specific workflow using one or more remote processors. The output data is used to process a node of the workflow using the diffusion model. The local diffusion engine is configured to output the synthesized image generated based on processing the plurality of nodes of the workflow using the diffusion model.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 schematically shows a computing environment including a local computing device executing a local diffusion engine that is configured to generate a synthesized image by processing a plurality of nodes of a workflow using a diffusion model, according to one example of the present disclosure.
FIG. 2 schematically shows a scenario in which input parameters for a node of the workflow of FIG. 1 are categorized into input parameter categories selected from a plurality of possible input parameter categories, according to one example of the present disclosure.
FIG. 3 schematically shows how different categories of input data of the node of FIG. 2 are processed differently, according to one example of the present disclosure.
FIGS. 4 shows a flowchart of a method for generating a synthesized image based on processing the plurality nodes of the workflow using the diffusion model of FIG. 1, according to one example of the present disclosure.
FIG. 5 shows a flowchart of a method for processing input parameters of input data for the plurality of nodes of the workflow of FIG. 1, according to one example of the present disclosure.
FIG. 6 shows a computing system representative of the computing devices / systems in the computing environment of FIG. 1, according to one example of the present disclosure.

### DETAILED DESCRIPTION

A primary issue of current diffusion-based image generation models is high computational demand to generate a synthesized image. Computing devices with constrained hardware capabilities experience significantly longer processing times or may be unable to run a generative image diffusion model altogether. Additionally, CPU-based execution of diffusion models is inefficient, often resulting in prohibitively slow image generation times that render real-time or interactive applications impractical.

Accordingly, to address these and other issues, examples are disclosed that relate to generating a synthesized image using a diffusion model in a manner that deploys processing resources on a fine-grained level to improve overall processing resource usage efficiency. In one example, a workflow including a plurality of nodes (also referred to herein as operators) is processed to generate a synthesized image using a diffusion model by partitioning the workflow at the node-level to selectively off-load computationally intensive nodes to be processed by remote higher-end processing resources (e.g., one or more graphics processing units (GPUs)) while less computationally intensive nodes are processed locally using lower-end processing resources (e.g., local central processing unit (CPU)).

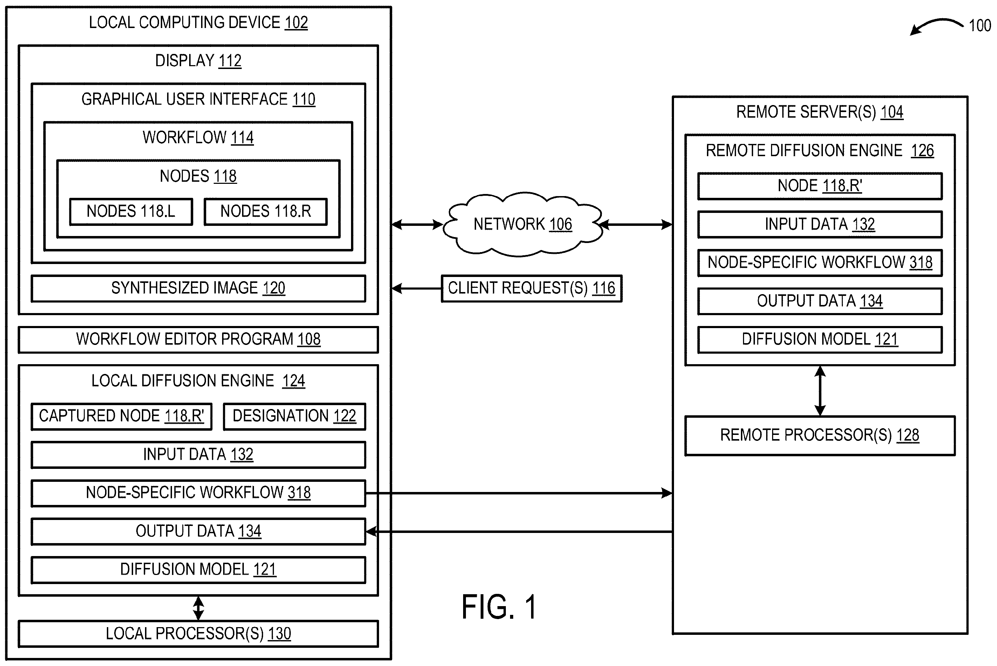

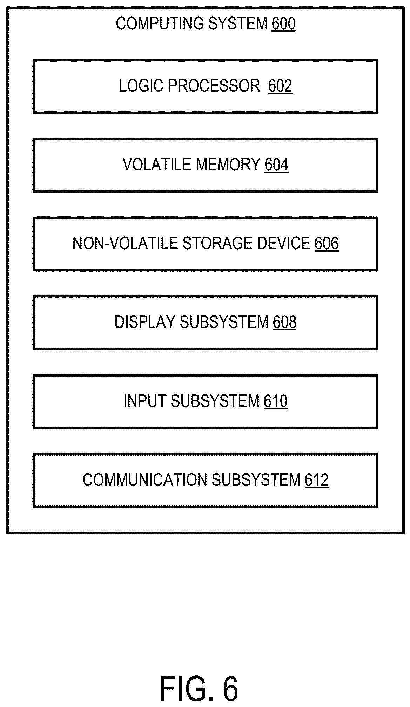

FIG. 1 schematically shows a computing environment 100 including a local computing device 102 and one or more remote servers 104 that are connected via a communications network 106, such as the Internet. In one example, the local computing device 102 and the remote server(s) 104 include or take the form of a computing system, as described in further detail with reference to FIG. 6.

The local computing device 102 is configured to execute a workflow editor program 108. The workflow editor program 108 is configured to generate a graphical user interface (GUI) 110 that is displayed via a display 112 of the local computing device 102. The GUI 110 is configured to enable construction of a workflow 114 based at least on one or more client requests 116.

In one example, the workflow editor program 108 is an open source program, such as ComfyUI that is primarily designed for use with latent diffusion workflows that are processed using latent diffusion models, but can be extendable to support non-latent workflows that are processed using non-latent diffusion models as desired. In other examples, the workflow editor program 108 can include other visual programming tools, such as Nodify, Node-Red, NoFlo, and Grape.js.

The workflow 114 includes a plurality of connected nodes 118 that are representative of different operators that are processed to generate a synthesized image 120 using a diffusion model 121. Each operator is a modular step or unit of computation that performs a specific function of the diffusion model 121 to generate the synthesized image 120.

In one example, the workflow 114 is a directed acyclic graph (DAG) in which each edge in the graph has a direction going from one node to another, and the graph contains no cycles such that nodes are processed in topological order without looping back to a previous node in the graph. Additionally, the DAG structure allows for independent branches so that, in some examples, multiple nodes of the workflow can be processed in parallel using the diffusion model 121 to speed up image generation.

In one example, the workflow editor program 108 is configured to allow a user to visually construct the workflow 114 using a drag-and-drop system based on the client request(s) 116. The user is provided with a pool of available operator nodes that can be selected to construct the workflow 114 to generate the synthesized image 120. Other examples of client requests 116 that can be used to construct the workflow 114 include loading models (Checkpoint Loader, LoRa Loader), adding prompts, applying control mechanisms (KSampler, VAEDecode, ImageUpscale, Noise Generator, Latent Mixing, Image Compositing), and connecting nodes, among other client requests 116.

Furthermore, the workflow editor program 108 is configured to enable a user to label designated nodes 118.R of the workflow 114 with a designation 122. Each designation 122 that is labeled on a designated node 118.R of the workflow 114 specifies a remote computing system that is selected to process the designated node 118.R, such as the remote server(s) 104. In one example, the designation 122 includes an internet protocol (IP) address of the remote computing system that is selected by the user to process the designated node 118.R. The IP address may be used to direct the node 118.R to the appropriate remote computing system to be processed without the workflow editor program 108 having to know locations of remote computing systems that are available to process the nodes 118.R. In some examples, multiple remote computing systems / remote servers can be used to process the designated nodes 118.R of the workflow 114 as specified according to the different IP addresses included in the designations 122.

The local computing device 102 is configured to execute a local diffusion engine 124 that is configured to process the workflow 114 to generate the synthesized image 120 using the diffusion model 121. More particularly, the local diffusion engine 124 is configured to deploy processing resources on a node-level during processing of the workflow 114 in order to selectively off-load the designated nodes 118.R to be processed by a remote diffusion engine 126 that is executed by the remote server(s) 104. The remote server(s) 104 includes one or more remote processors 128, and the remote diffusion engine 126 is configured to process the designated nodes 118.R of the workflow 114 using the diffusion model 121 by deploying the designated nodes 118.R to be processed by the remote processor(s) 128. Example node 118.R' is representative of the plurality of designated nodes 118.R of the workflow 114 that are processed by the remote diffusion engine 126. Discussion of the example node 118.R' also applies to the other nodes 118 of the workflow 114.

Furthermore, the local diffusion engine 124 is configured to process nodes 118.L of the workflow 114 that are not labeled with the designations 122 using the diffusion model 121 by deploying the nodes 118.L to be processed by the one or more local processors 130 of the local computing device 102. In some examples, the local diffusion engine 124 is configured to process the nodes 118.L that are unlabeled using the local processor(s) 130 of the local computing device 102 by default. In other examples, each node 118 of the workflow 114 is explicitly labeled with a given designation specifying which computing system / processor(s) are to be used to process the node (e.g., local, remote).

In one example, the remote processor(s) 128 are higher-end processor(s) (e.g., a graphical processing unit (GPU) or shared GPU clusters) that can process computationally intensive nodes 118.R of the workflow 114 faster than the local processor(s) 130 of the local computing device 102. In some examples, the local computing device 102 may have constrained processing resources relative to the remote server(s) 104, such as in a mobile computing device (e.g., smart phone, tablet, wearable device). By off-loading the computationally intensive nodes 118.R for processing by the remote processor(s) 128 of the remote server(s) 104, the local processor(s) 130 can be made available to perform other lower-level processing operations, whether it is processing other less computationally intensive nodes 118.L of the workflow 114 or performing other computing operations related to generating the synthesized image 120. In this way, the workflow 114 can be processed to generate the synthesized image 120 faster than a conventional approach where the plurality of the nodes 118 of the workflow 114 are processed exclusively by the local processor(s) 130 of the local computing device 102.

In one example, the functionality that allows the nodes 118.R to be labeled with designations 122 in the GUI 110 can be implemented as a module that is an extension of the local diffusion engine 124. The module can be pluggable into the workflow editor program 108, such that the workflow editor program 108 does not need to be modified / customized in order to integrate the functionality of designating a computing system / processor(s) to process a designated node 118.R of the workflow 114.

In order to properly off-load processing of the designated nodes 118.R to the remote diffusion engine 126 data consistency has to be maintained between the local diffusion engine 124 and the remote diffusion engine 126. Both the local diffusion engine 124 and the remote diffusion engine 126 have the same execution environment, meaning that both the local diffusion engine 124 and the remote diffusion engine 126 process nodes 118 of the workflow 114 using the same diffusion model 121 and the same processing techniques.

The diffusion model 121 can take various forms in different implementations. In one example, the diffusion model 121 is a latent diffusion model that is configured to perform a noisy denoising process in a compressed (latent) space rather than directly in pixel space. Example latent diffusion models include Stable Diffusion and Imagen. In another example, the diffusion model 121 is a non-latent diffusion model that is configured to perform noisy denoising process directly in pixel space. Example non-latent diffusion models include Denoising Diffusion Probabilistic Models (DDPM), score-based generative models, and Noise Conditional Score Network (NCSN) models.

The diffusion model 121 can have different architectures in different implementations. In one example, the diffusion model 121 has a U-net control network architecture. In another example, the latent diffusion model has a diffusion transformer (DiT) architecture that uses a different type of control network.

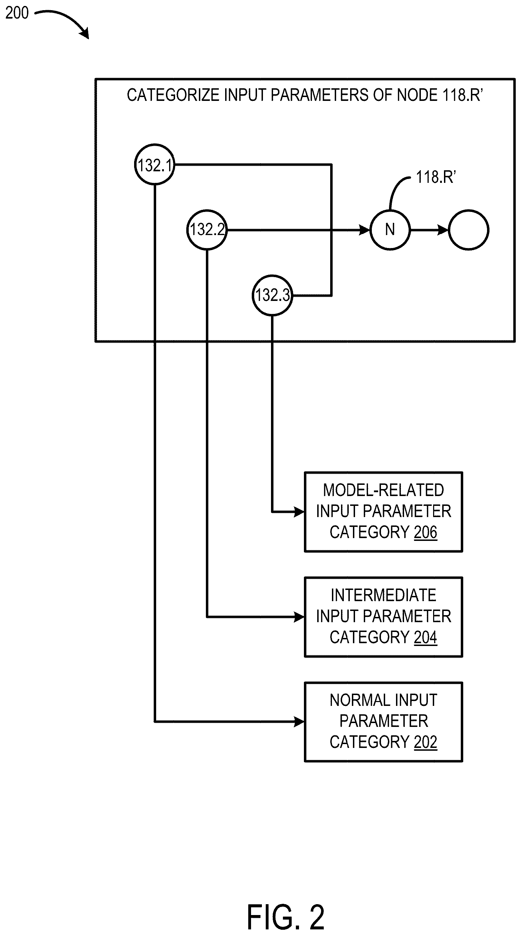

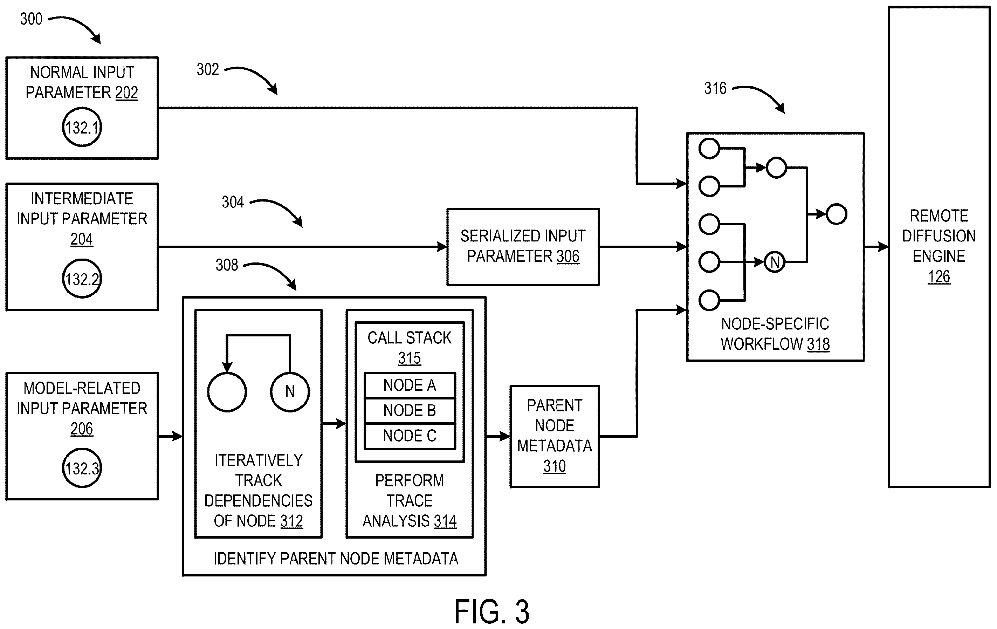

In order to maintain data consistency, input data, configuration data, and other metadata that the remote diffusion engine 126 uses to process the example node 118.R' has to be consistent with the input data, configuration data, and other metadata for the example node 118.R' that is in the workflow 114. As such, the local diffusion engine 124 is configured to capture input data 132 for the example node 118.R' from the workflow 114 to send to the remote diffusion engine 126. The input data 132 comprises one or more input parameters (e.g., 132.1, 132.2, 132.3 shown in FIGS. 2 and 3) that are provided as input to an operator represented by the example node 118.R' in the workflow 114.

In some examples, prior to sending the captured input data 132 to the remote diffusion engine 126, the local diffusion engine 124 is configured to selectively pre-process the input data 132 in order to reduce the overall quantity of data that is sent to the remote diffusion engine 126 across the communications network 106. The local diffusion engine 124 is configured to intelligently pre-process different input parameters using different strategies based on an input parameter category that is selected for the input parameter from a plurality of input parameter categories.

FIG. 2 schematically shows a scenario 200 in which the local diffusion engine 124 categorizes a plurality of input parameters corresponding to the input data 132 for the example node 118.R' into input parameter categories selected from a plurality of input parameter categories.

In the illustrated example, the example node 118.R' has three input parameters 132.1, 132.2, 132.3. The local diffusion engine 124 is configured to categorize the three input parameters 132.1, 132.2, 132.3 into any one of three possible input parameter categories including a normal input parameter category 202, an intermediate category 204, and a model-related category 206.

In one example, input parameters that are categorized into the normal input parameter category 202 include numbers and/or characters, such as an integer, a floating point number, and a string. Input parameters that are categorized into the intermediate input parameter category 204 include latent data (e.g., a tensor of a compressed image) and conditioning data (e.g., text embeddings, external input, ControlNet maps). Input parameters that are categorized into the model-related input parameter category 206 include parameters that define or are tied to the diffusion model 121 used during processing of the workflow 114, such as U-net model weights, parameters for a Variational Autoencoder (VAE), a Text Encoder (e.g., CLIP, T5), a Scheduler/Noise Sampler, LoRA / ControlNet / Hypernetworks modes, and a Tokenizer. In other examples, input parameters corresponding to the input data 132 can be categorized into other suitable input parameter categories.

In the illustrated example, the local diffusion engine 124 categorizes a first input parameter 132.1 into the normal input parameter category 202, a second input parameter 132.2 into the intermediate input parameter category 204, and a third input parameter 132.2 into the model-related input parameter category 206. Once the local diffusion engine 124 has categorized the input parameters 132.1, 132.2, 132.3 into the appropriate categories, the local diffusion engine 124 is configured to pre-process the input parameters 132.1, 132.2, 132.3 based at least on the input parameter categories 202, 204, 206 selected for the input parameters 132.1, 132.2, 132.3.

FIG. 3 schematically shows a scenario 300 in which the local diffusion engine 124 is configured to pre-process the different input parameters 132.1, 132.2, 132.3 of the example node 118.R' differently based on the input parameter categories selected for the input parameters 132.1, 132.2, 132.3, according to one example of the present disclosure.

At 302, the local diffusion engine 124 is configured to process the first input parameter 132.1 that is categorized in the normal input parameter category 202 by integrating the first input parameter 132.1 directly into a node-specific workflow 328 for the example designated node 118.R'. In other words, normal input parameters do not require additional pre-processing since they are merely numbers or characters and can be integrated directly into the node-specific workflow 318.

At 304, The local diffusion engine 124 is configured to pre-process the second input parameter 132.2 that is categorized in the intermediate input parameter category 204 by serializing the second input parameter 132.2 into a structured format to generate a serialized input parameter 306. In one example, the structured format of the serialized input parameter 306 is JSON. The structured format of the serialized input parameter 306 allows for the serialized input parameter 306 to be stored, transmitted, and/or loaded without affecting the behavior of the serialized input parameter 306. The serialized input parameter 306 is integrated into the node-specific workflow 318. In this way, data consistency of intermediate input parameters can be maintained when the node-specific workflow 318 is processed by the remote diffusion engine 126.

At 308, the local diffusion engine 124 is configured to pre-process the third input parameter 132.3 that is categorized in the model-related input parameter category 206 by identifying parent node metadata 310 from which the third input parameter 132.3 depends in the workflow 114. The parent node metadata 310 is identified and integrated into the node-specific workflow 318 instead of integrating data for entire model(s) into the node-specific workflow 318, because the cost of transferring the parent node metadata 310, in most cases, is less than the cost of transferring the model data. In one example, at 312, the dependent parent node metadata 310 is identified by iteratively tracking dependencies of parent nodes of the example node 118.R' and associated input parameters along the workflow 114. In one example, at 314, the parent node metadata 310 is identified by performing trace analysis on a call stack 315 that specifies an order of execution of function calls when the local diffusion engine 124 processes the plurality of nodes 118 of the workflow 114.

Once the input parameters 132.1, 132.2, 132.3 are pre-processed, at 316, the local diffusion engine 124 is configured to generate the node-specific workflow 318 centered around the example node 118.R'. In one example, the node-specific workflow 318 is a DAG including the example node 118.R' and all dependent nodes including the pre-processed input parameters generated from the parent nodes. If the input parameters have further dependent nodes, then data from those dependent nodes are iteratively added until a valid DAG is constructed. In the illustrated example, the node-specific workflow 318 includes the example node 118.R', the pre-processed input data including the normal input parameter 132.1, the serialized input parameter 306 corresponding to the intermediate input parameter 132.2, and the parent node metadata 310 corresponding to the model-related input parameter 132.3.

In some examples, in order to avoid a scenario where the remote diffusion engine 126 has to manually configure the diffusion model 121 used during processing of the node-specific workflow 318, model configuration information and other model metadata identified from the trace analysis of the call stack 315 (performed at 314) can be associated with the node-specific workflow 318. For example, if the trace analysis identifies that the diffusion model 121 uses LoRa, then it is assumed that the diffusion model 121 depends on another AI model. As such, when analyzing the calling stack, configuration information for both the LoRa-based model and the additional AI model can be collected and integrated into the node-specific workflow 318 as metadata that is used to configure the AI models when processing the node-specific workflow 318.

In other examples, the local diffusion engine 124 is configured to construct the node-specific workflow 318 for the node based at least on the input data 132 captured for the example node 118.R' without performing pre-processing of the input data 132.

Returning to FIG. 1, the local diffusion engine 124 is configured to send, via the communications network 106, the node-specific workflow 318 to the remote diffusion engine 126. The remote diffusion engine 126 is configured to process the node-specific workflow 318 using the diffusion model 121 by deploying node(s) of the node-specific workflow 318 to be processed by the remote processor(s) 128 to generate output data 134.

In some examples, the remote diffusion engine 126 is configured to process the node-specific workflow 318 using the remote processor(s) 128 according to a space-sharing processing technique. The space-sharing technique divides one physical processor (e.g., GPU) into multiple virtual processors / GPUs, so that the remote diffusion engine 126 can deploy multiple instances of processing operations in parallel. Further, in some examples, the remote diffusion engine 126 can process multiple node-specific workflows received from different local computing devices in parallel using the space-sharing technique.

In some examples, the remote diffusion engine 126 is configured to process the node-specific workflow 318 using the remote processor(s) 128 according to a time-sharing processing technique. The time sharing technique allows each processing operation to have full use of a processor (e.g., GPU) for a slice of time. By allocating time slices to multiple processing operations, the processor / GPU can be shared between processing operations in a resilient way that allows for the processor / GPU to collectively process multiple processing operations within the same cycle of time slices.

Further, in some examples, the remote diffusion engine 126 is configured to process the node-specific workflow 318 using the remote processor(s) 128 according to both the space-sharing processing technique and the time-sharing processing technique.

By scheduling processing of the workflow 114 at the node-level to selectively off-load processing of designated nodes 118.R of the workflow 114, the space-sharing and time-sharing processing techniques can be made more efficient relative to a conventional approach where an entire workflow 114 is processed locally by the same processor(s). In particular, for the space-sharing processing technique, the node-level scheduling reduces the processor / GPU memory footprint yielding better stability, because the processor / GPU only needs to process computationally intensive operators while lower level operators can be processed by local processor(s) 130 of the local computing device 102. For the time-sharing processing technique, the node-level scheduling reduces the cost of context switching and improves processor / GPU utilization relative to a conventional approach where an entire workflow 114 is processed locally by the same processor(s).

Once the remote diffusion engine 126 has completed processing the node-specific workflow 318 to generate the output data 134, the remote diffusion engine 126 is configured to send, via the communications network 106, the output data 134 to the local diffusion engine 124. In one example, the output data 134 includes output one or more output parameters that can be used as input to another node of the workflow 114. The local diffusion engine 124 is configured to use the output data 134 to process another node 118 of the workflow 114 in order to generate the synthesized image 120. The local diffusion engine 124 is configured to display the synthesized image 120 via the display 112 of the local computing device 102.

Note that, in some examples, the node-level scheduling approach does not require the remote diffusion engine 126 to be modified or customized to process the node-specific workflow 318, because the remote diffusion engine 126 does not need to know if the node-specific workflow 318 is part of the larger workflow 114. Rather, the remote diffusion engine 126 merely processes the node-specific workflow 318 as if it is independent of another workflow.

In one example, the node-level approach for processing a workflow to generate a synthesized image using both local processing resources (e.g., a laptop CPU) and remote processing resources (e.g., a remote GPU) described herein was tested against a conventional approach for processing a workflow that is performed only using the local processing resources (e.g., the laptop CPU). The node-level approach produced a synthesized image in 45.76 seconds, whereas the conventional approach produced a synthesized image in 377 seconds. Additionally, the node-level approach improved throughput of the GPU by up to 28.61% relative to the conventional approach. This benefit is obtained from the processing workload being shared between both the remote GPU and the local CPU.

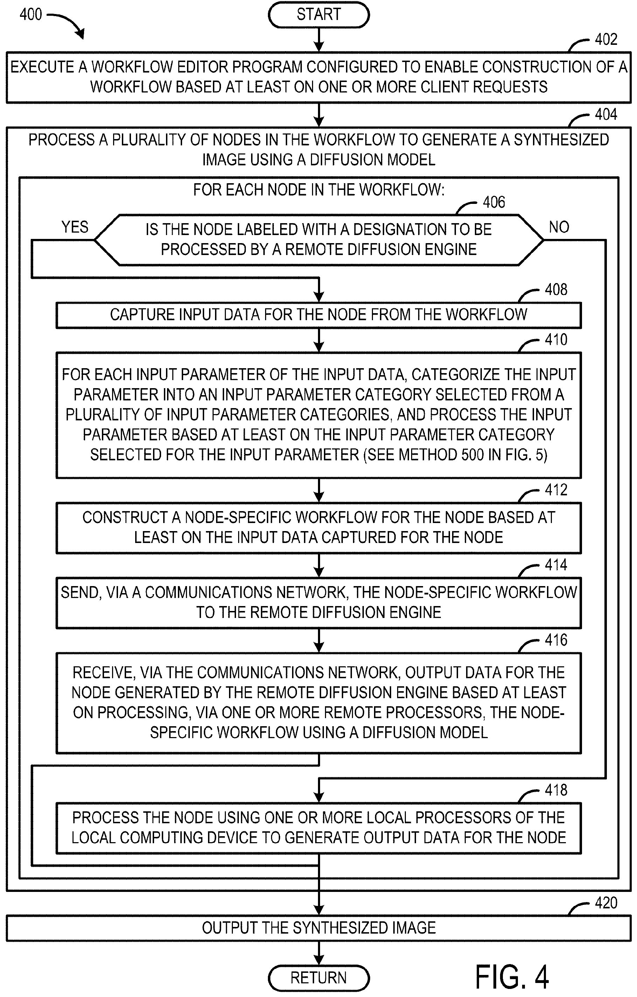

FIG. 4 shows a method 400 for generating a synthesized image based on processing a workflow including a plurality of nodes. For example, the method 400 may be performed by the local computing device 102 of FIG. 1, according to one example of the present disclosure. More specifically, in one example, at least some of the steps of the method 400 are performed by the local diffusion engine 124 of FIG. 1.

In FIG. 4, at 402, the method 400 includes executing a workflow editor program configured to generate a GUI displayed via a display of the local computing device. The GUI is configured to enable construction of a workflow based at least on one or more client requests. The workflow includes a plurality of connected nodes that are representative of different operations that are performed to generate a synthesized image using a diffusion model. The GUI is configured to enable nodes of the workflow to be labeled with a designation to be processed by a remote diffusion engine based at least on the one or more client requests.

At 404, the method 400 includes processing the plurality of nodes of the workflow to generate a synthesized image using the diffusion model.

The method steps 406-420 describe further aspects of processing each node of the workflow on an individual basis.

At 406, the method 400 includes determining if the node is labeled with a designation to be processed by a remote diffusion engine. The remote diffusion engine is executed by a remote computing system including one or more remote processors. If the node is labeled with a designation to be processed by a remote diffusion engine, the method 400 moves to 408. Otherwise, the method 400 moves to 418.

At 408, the method 400 includes capturing input data for the node from the workflow.

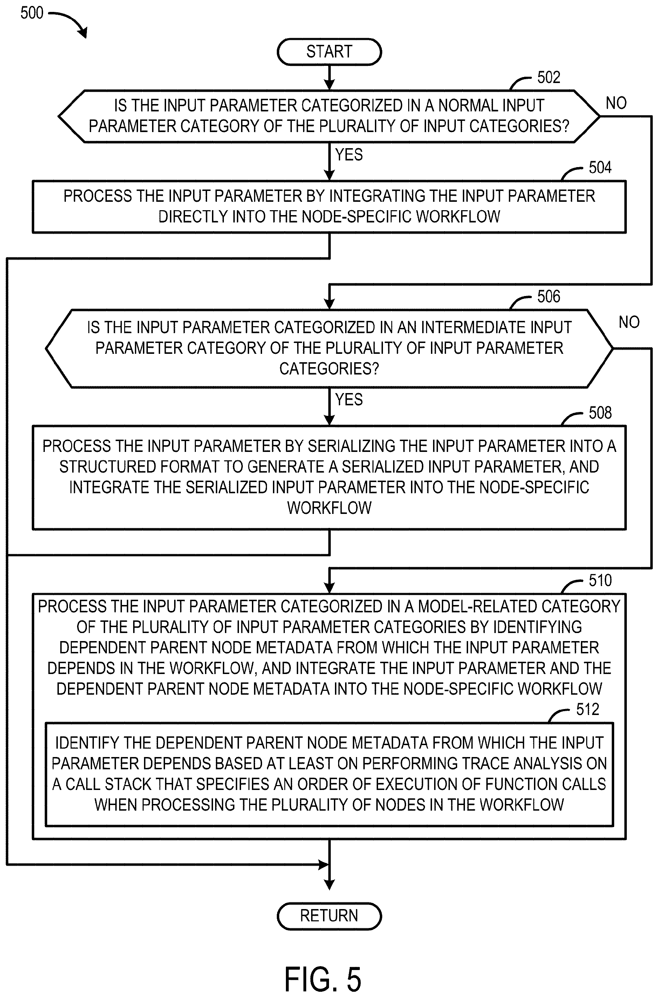

At 410, the method 400 includes, for each input parameter of the input data, categorizing the input parameter into an input parameter category selected from a plurality of input parameter categories, and processing the input parameter based at least on the input parameter category selected for the input parameter. FIG. 5 shows a method 500 for processing each input parameter of the plurality of input parameters of the input data captured from the workflow as will be discussed in further detail below.

At 412, the method 400 includes constructing a node-specific workflow for the node based at least on the input data captured for the node.

At 414, the method 400 includes sending, via a communications network, the node-specific workflow to the remote diffusion engine. The remote diffusion is configured to process, via the remote processor(s) of the remote computing system, the node-specific workflow using the diffusion model.

At 416, the method 400 includes receiving, via the communications network, output data for the node generated by the remote diffusion engine based at least on processing the node-specific workflow using one or more remote processors. The output data is used to process another node of the workflow.

At 418, the method 400 includes processing the node that is not labeled with the designation to be processed by the remote diffusion engine using one or more local processors of the local computing device to generate output data for the node. The output data is used to process another node of the workflow.

At 420, the method 400 includes outputting the synthesized image generated based on processing the plurality of nodes of the workflow using the diffusion model.

The method 400 may be performed to process a workflow on a node-level to generate a synthesized image using a diffusion model by selectively off-loading designated nodes to be processed by one or more remote processors. In one example, the remote processor(s) are high-end processor(s) (e.g., a graphical processing unit (GPU) or shared GPU clusters) that can process computationally intensive nodes of the workflow faster than local processor(s) of the local computing device. By off-loading the computationally intensive nodes. for processing by the remote processor(s), the local processor(s) can be made available to perform other lower-level processing operations, whether it is processing other less computationally intensive nodes of the workflow or performing other computing operations related to generating the synthesized image. In this way, the workflow can be processed to generate the synthesized image faster than a conventional approach where the plurality of the nodes of the workflow are processed exclusively by the local processor(s) of the local computing device. Moreover, the method 400 may be performed to provides fine-grained scheduling of processing nodes that works seamlessly with time-sharing and/or space-sharing processing techniques that improves overall computing system throughput and efficiency.

FIG. 5 shows the method 500 for processing each input parameter of the plurality of input parameters of the input data captured from the workflow for the designated node. The method 500 may be performed as part of the method 400, according to one example of the present disclosure. The steps of the method 500 describe aspects of processing each input parameter of the input data for the node of the workflow on an individual basis.

At 502, the method 500 includes determining if the input parameter is categorized in a normal input parameter category of the plurality of input parameter categories. If the input parameter is categorized in the normal input parameter category, then the method 500 moves to 504. Otherwise, the method 500 moves to 506.

At 504, the method 500 includes processing the input parameter by integrating the input parameter directly into the node-specific workflow for the designated node.

At 506, the method 500 includes determining if the input parameter is categorized in an intermediate input parameter category of the plurality of input parameter categories. If the input parameter is categorized in the intermediate input parameter category, then the method 500 moves to 508. Otherwise, the method 500 moves to 510.

At 508, the method 500 includes processing the input parameter by serializing the input parameter into a structured format to generate a serialized input parameter, and integrating the serialized input parameter into the node-specific workflow for the designated node.

At 510, the method 500 includes processing the input parameter categorized in a model-related category of the plurality of input parameter categories by identifying dependent parent node meta data from which the input parameter depends in the workflow, and integrating the input parameter and the dependent parent node metadata into the node-specific workflow for the designated node.

In some implementations, at 512, the method 500 may include identifying the dependent parent node metadata from which the input parameter depends based at least on performing trace analysis on a call stack that specifies an order of execution of function calls when processing the plurality of nodes of the workflow.

The method 500 may be performed to categorize each input parameter of a node into different categories and process each input parameter differently based on the category that is selected for the input parameter in order to reduce the cost of transmitting the input data to the remote diffusion engine while still maintaining data consistency between the local diffusion engine and the remote diffusion engine.

In some implementations, the methods and processes described herein may be tied to a computing system of one or more computing devices. In particular, such methods and processes may be implemented as a computer processing engine, a computer-application program or service, an application-programming interface (API), a library, and/or other computer-program products.

FIG. 6 schematically shows a non-limiting implementation of a computing system 600 that can enact one or more of the methods and processes described above. Computing system 600 is shown in simplified form. Computing system 600 may embody the local computing device 102 and the remote server(s) 104 shown in FIG. 1. Computing system 600 may take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 600 includes a logic processor 602 volatile memory 604, and a non-volatile storage device 606. Computing system 600 may optionally include a display subsystem 608, input subsystem 610, communication subsystem 612, and/or other components not shown in FIG. 6.

Logic processor 602 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 602 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 606 includes one or more physical devices configured to hold instructions executable by the logic processors to implement the methods and processes described herein. When such methods and processes are implemented, the state of non-volatile storage device 606 may be transformed-e.g., to hold different data.

Non-volatile storage device 606 may include physical devices that are removable and/or built-in. Non-volatile storage device 606 may include optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 606 may include nonvolatile, dynamic, static, read/write, read-only, sequential-access, location-addressable, file-addressable, and/or content-addressable devices. It will be appreciated that non-volatile storage device 606 is configured to hold instructions even when power is cut to the non-volatile storage device 606.

Volatile memory 604 may include physical devices that include random access memory. Volatile memory 604 is typically utilized by logic processor 602 to temporarily store information during processing of software instructions. It will be appreciated that volatile memory 604 typically does not continue to store instructions when power is cut to the volatile memory 604.

Aspects of logic processor 602, volatile memory 604, and non-volatile storage device 606 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 600 typically implemented in software by a processor to perform a particular function using portions of volatile memory, which function involves transformative processing that specially configures the processor to perform the function. Thus, a module, program, or engine may be instantiated via logic processor 602 executing instructions held by non-volatile storage device 606, using portions of volatile memory 604. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 608 may be used to present a visual representation of data held by non-volatile storage device 606. The visual representation may take the form of a graphical user interface (GUI). As the herein described methods and processes change the data held by the non-volatile storage device, and thus transform the state of the non-volatile storage device, the state of display subsystem 608 may likewise be transformed to visually represent changes in the underlying data. Display subsystem 608 may include one or more display devices utilizing virtually any type of technology. Such display devices may be combined with logic processor 602, volatile memory 604, and/or non-volatile storage device 606 in a shared enclosure, or such display devices may be peripheral display devices.

When included, input subsystem 610 may comprise or interface with one or more user-input devices such as a keyboard, mouse, touch screen, or game controller. In some implementations, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; and/or another suitable sensor.

When included, communication subsystem 612 may be configured to communicatively couple various computing devices described herein with each other, and with other devices. Communication subsystem 612 may include wired and/or wireless communication devices compatible with one or more different communication protocols. As non-limiting examples, the communication subsystem may be configured for communication via a wireless telephone network, or a wired or wireless local- or wide-area network, such as a HDMI over Wi-Fi connection. In some implementations, the communication subsystem may allow computing system 600 to send and/or receive messages to and/or from other devices via a network such as the Internet.

The following paragraphs provide additional description of the subject matter of the present disclosure.

In an example, a computing device comprises one or more processors configured to execute instructions stored in memory to execute a local diffusion engine configured to process a plurality of nodes in a workflow to generate a synthesized image using a diffusion model, wherein, for each node of the workflow that is labeled with a designation to be processed by a remote diffusion engine, capture input data for the node from the workflow, construct a node-specific workflow for the node based at least on the input data captured for the node, send, via a communications network, the node-specific workflow to the remote diffusion engine, receive, via the communications network, output data for the node generated by the remote diffusion engine based at least on processing the node-specific workflow using one or more remote processors, wherein the output data is used to process a node of the workflow, and output the synthesized image. In this example and/or other examples, the local diffusion engine may be configured to process the plurality of nodes of the workflow by, for each node of the workflow that is not labeled with the designation to be processed by the remote diffusion engine process the node using the one or more processors of the computing device to generate output data for the node, wherein the output data is used to process a node of the workflow. In this example and/or other examples, the local diffusion engine may be configured to capture the input data for the node from the workflow by, for each input parameter of one or more input parameters corresponding to the input data, categorize the input parameter into an input parameter category selected from a plurality of input parameter categories, and process the input parameter based at least on the input parameter category selected for the input parameter. In this example and/or other examples, the local diffusion engine may be configured to, for each input parameter of the one or more input parameters that is categorized in a normal input parameter category of the plurality of input parameter categories, process the input parameter by integrating the input parameter directly into the node-specific workflow. In this example and/or other examples, the local diffusion engine may be configured to, for each input parameter of the one or more input parameters that is categorized in an intermediate input parameter category of the plurality of input parameter categories, process the input parameter by serializing the input parameter into a structured format to generate a serialized input parameter, and integrating the serialized input parameter into the node-specific workflow. In this example and/or other examples, the local diffusion engine may be configured to, for each input parameter of the one or more input parameters that is categorized in a model-related input parameter category of the plurality of input parameter categories, process the input parameter by identifying dependent parent node metadata from which the input parameter depends in the workflow, and integrating the input parameter and the dependent parent node metadata into the node-specific workflow. In this example and/or other examples, the local diffusion engine may be configured to identify the dependent parent node metadata from which the input parameter depends based at least on performing trace analysis on a call stack that specifies an order of execution of function calls when processing the plurality of nodes of the workflow. In this example and/or other examples, the designation to be processed by the remote diffusion engine may include an internet protocol (IP) address of a computing system that is configured to execute the remote diffusion engine. In this example and/or other examples, the workflow may be a directed acyclic graph (DAG). In this example and/or other examples, the local diffusion engine may be configured to process the plurality of nodes of the workflow one by one in a topological order. In this example and/or other examples, the remote diffusion engine may be configured to process the node-specific workflow using one or more remote processors according to a space-sharing processing technique. In this example and/or other examples, the remote diffusion engine may be configured to process the node-specific workflow using one or more remote processors according to a time-sharing processing technique.

In another example, a method performed by a computing system, comprises processing a plurality of nodes of a workflow to generate a synthesized image using a diffusion model, wherein, for each node of the workflow that is labeled with a designation to be processed by a remote diffusion engine capturing input data for the node from the workflow, constructing a node-specific workflow for the node based at least on the input data captured for the node, sending, via a communications network, the node-specific workflow to the remote diffusion engine, receiving, via the communications network, output data for the node generated by the remote diffusion engine based at least on processing the node-specific workflow using one or more remote processors, wherein the output data is used to process a node of the workflow; and outputting the synthesized image. In this example and/or other examples, processing a plurality of nodes of a workflow to generate a synthesized image using the diffusion model may include, for each node of the workflow that is not labeled with the designation to be processed by the remote diffusion engine processing the node using one or more local processors of the computing system to generate output data for the node, wherein the output data is used to process a node of the workflow. In this example and/or other examples, capturing the input data for the node from the workflow may include, for each input parameter of one or more input parameters corresponding to the input data, categorizing the input parameter into an input parameter category selected from a plurality of input parameter categories, and processing the input parameter based at least on the input parameter category selected for the input parameter. In this example and/or other examples, for each input parameter of the one or more input parameters that is categorized in a normal input parameter category of the plurality of input parameter categories, processing the input parameter may include integrating the input parameter directly into the node-specific workflow. In this example and/or other examples, for each input parameter of the one or more input parameters that is categorized in an intermediate input parameter category of the plurality of input parameter categories, processing the input parameter may include serializing the input parameter into a structured format to generate a serialized input parameter, and integrating the serialized input parameter into the node-specific workflow. In this example and/or other examples, for each input parameter of the one or more input parameters that is categorized in a model-related input parameter category of the plurality of input parameter categories, processing the input parameter may include identifying dependent parent node metadata from which the input parameter depends in the workflow, and integrating the input parameter and the dependent parent node metadata from which the input parameter depends into the node-specific workflow. In this example and/or other examples, the dependent parent node metadata from which the input parameter depends may be identified based at least on performing trace analysis on a call stack that specifies an order of execution of function calls when processing the plurality of nodes of the workflow.

In yet another example, a computing device comprise one or more processors configured to execute instructions stored in memory to execute a workflow editor program configured to generate a graphical user interface (GUI) displayed via a display, wherein the GUI is configured to enable construction of a workflow based at least on one or more client requests, wherein the workflow includes a plurality of connected nodes that are representative of different operations that are performed to generate a synthesized image using a diffusion model, wherein the GUI is configured to enable nodes of the workflow to be labeled with a designation to be processed by a remote diffusion engine based at least on the one or more client requests, and execute a local diffusion engine configured to process the plurality of nodes of the workflow to generate the synthesized image using the diffusion model, wherein, for each node of the workflow that is labeled with the designation to be processed by the remote diffusion engine capture input data for the node from the workflow, construct a node-specific workflow for the node based at least on the input data captured for the node, send, via a communications network, the node-specific workflow to the remote diffusion engine, receive, via the communications network, output data for the node generated by the remote diffusion engine based at least on processing the node-specific workflow using one or more remote processors, wherein the output data is used to process a node of the workflow, and output the synthesized image.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computing device comprising:
one or more processors configured to execute instructions stored in memory to:
execute a local diffusion engine configured to:
process (404) a plurality of nodes in a workflow to generate a synthesized image using a diffusion model, wherein, for each node of the workflow that is labeled with a designation to be processed by a remote diffusion engine:
capture (408) input data for the node from the workflow,
construct (412) a node-specific workflow for the node based at least on the input data captured for the node,
send (414), via a communications network, the node-specific workflow to the remote diffusion engine;
receive (416), via the communications network, output data for the node generated by the remote diffusion engine based at least on processing the node-specific workflow using one or more remote processors, wherein the output data is used to process a node of the workflow; and
output (420) the synthesized image.

2. The computing device of claim 1, wherein the local diffusion engine is configured to process the plurality of nodes of the workflow by, for each node of the workflow that is not labeled with the designation to be processed by the remote diffusion engine:
process (418) the node using the one or more processors of the computing device to generate output data for the node, wherein the output data is used to process a node of the workflow.

3. The computing device of claim 1, wherein the local diffusion engine is configured to capture the input data for the node from the workflow by, for each input parameter of one or more input parameters corresponding to the input data, categorize (410) the input parameter into an input parameter category selected from a plurality of input parameter categories, and process the input parameter based at least on the input parameter category selected for the input parameter.

4. The computing device of claim 3, wherein the local diffusion engine is configured to, for each input parameter of the one or more input parameters that is categorized in a normal input parameter category of the plurality of input parameter categories, process (504) the input parameter by integrating the input parameter directly into the node-specific workflow.

5. The computing device of claim 3, wherein the local diffusion engine is configured to, for each input parameter of the one or more input parameters that is categorized in an intermediate input parameter category of the plurality of input parameter categories, process (508) the input parameter by serializing the input parameter into a structured format to generate a serialized input parameter, and integrating the serialized input parameter into the node-specific workflow.

6. The computing device of claim 3, wherein the local diffusion engine is configured to, for each input parameter of the one or more input parameters that is categorized in a model-related input parameter category of the plurality of input parameter categories, process (510) the input parameter by identifying dependent parent node metadata from which the input parameter depends in the workflow, and integrating the input parameter and the dependent parent node metadata into the node-specific workflow.

7. The computing device of claim 6, wherein the local diffusion engine is configured to identify (512) the dependent parent node metadata from which the input parameter depends based at least on performing trace analysis on a call stack that specifies an order of execution of function calls when processing the plurality of nodes of the workflow.

8. The computing device of claim 1,
wherein the designation to be processed by the remote diffusion engine includes an internet protocol (IP) address of a computing system that is configured to execute the remote diffusion engine;
wherein the workflow is a directed acyclic graph (DAG);
wherein the local diffusion engine is configured to process the plurality of nodes of the workflow one by one in a topological order;
wherein the remote diffusion engine is configured to process the node-specific workflow using one or more remote processors according to a space-sharing processing technique; or
wherein the remote diffusion engine is configured to process the node-specific workflow using one or more remote processors according to a time-sharing processing technique.

9. A method performed by a computing device, the method comprising:
processing (404) a plurality of nodes of a workflow to generate a synthesized image using a diffusion model, wherein, for each node of the workflow that is labeled with a designation to be processed by a remote diffusion engine:
capturing (408) input data for the node from the workflow;
constructing (412) a node-specific workflow for the node based at least on the input data captured for the node;
sending (414), via a communications network, the node-specific workflow to the remote diffusion engine;
receiving (416), via the communications network, output data for the node generated by the remote diffusion engine based at least on processing the node-specific workflow using one or more remote processors, wherein the output data is used to process a node of the workflow; and
outputting (420) the synthesized image.

10. The method of claim 9, wherein processing a plurality of nodes of a workflow to generate a synthesized image using the diffusion model includes, for each node of the workflow that is not labeled with the designation to be processed by the remote diffusion engine:
processing (418) the node using one or more local processors of the computing device to generate output data for the node, wherein the output data is used to process a node of the workflow.

11. The method of claim 9, wherein capturing the input data for the node from the workflow includes, for each input parameter of one or more input parameters corresponding to the input data, categorizing **(410)** the input parameter into an input parameter category selected from a plurality of input parameter categories, and processing the input parameter based at least on the input parameter category selected for the input parameter.

12. The method of claim 11, wherein, for each input parameter of the one or more input parameters that is categorized in a normal input parameter category of the plurality of input parameter categories, processing the input parameter includes integrating (504) the input parameter directly into the node-specific workflow; or
wherein, for each input parameter of the one or more input parameters that is categorized in an intermediate input parameter category of the plurality of input parameter categories, processing the input parameter includes serializing (508) the input parameter into a structured format to generate a serialized input parameter, and integrating the serialized input parameter into the node-specific workflow.

13. The method of claim 11, wherein, for each input parameter of the one or more input parameters that is categorized in a model-related input parameter category of the plurality of input parameter categories, processing the input parameter includes identifying (510) dependent parent node metadata from which the input parameter depends in the workflow, and integrating the input parameter and the dependent parent node metadata from which the input parameter depends into the node-specific workflow.

14. The method of claim 13, wherein the dependent parent node metadata from which the input parameter depends is identified (512) based at least on performing trace analysis on a call stack that specifies an order of execution of function calls when processing the plurality of nodes of the workflow.

15. A computing device comprising:
one or more processors configured to execute instructions stored in memory to:
execute (402) a workflow editor program configured to generate a graphical user interface (GUI) displayed via a display, wherein the GUI is configured to enable construction of a workflow based at least on one or more client requests, wherein the workflow includes a plurality of connected nodes that are representative of different operations that are performed to generate a synthesized image using a diffusion model, wherein the GUI is configured to enable nodes of the workflow to be labeled with a designation to be processed by a remote diffusion engine based at least on the one or more client requests; and
execute a local diffusion engine configured to:
process (404) the plurality of nodes of the workflow to generate the synthesized image using the diffusion model, wherein, for each node of the workflow that is labeled with the designation to be processed by the remote diffusion engine:
capture (408) input data for the node from the workflow,
construct (412) a node-specific workflow for the node based at least on the input data captured for the node,
send (414), via a communications network, the node-specific workflow to the remote diffusion engine;
receive (416), via the communications network, output data for the node generated by the remote diffusion engine based at least on processing the node-specific workflow using one or more remote processors, wherein the output data is used to process a node of the workflow; and
output (420) the synthesized image.
